# EUROPEAN PATENT SPECIFICATION

(11) **EP 0 670 983 B1**
(45) Date of publication and mention of the grant of the patent: **25.02.1998**
(21) Application number: 92921765.1
(22) Date of filing: 23.09.1992
(51) Int. Cl.: F23B 7/00, C10B 53/00

(54) **METHOD FOR RETORTING ORGANIC MATTER**
METHODE ZUR PYROLYSE VON ORGANISCHEN MATERIALEN
PROCEDE DE DISTILLATION EN CORNUE DE SUBSTANCES ORGANIQUES

(30) Priority: 22.07.1992 US 917199
(43) Date of publication of application: 13.09.1995
(73) Proprietor: COVENANT ENVIRONMENTAL TECHNOLOGIES, INC., Memphis, TN 38115 (US)
(72) Inventor: MILSAP, Isaac Hal, III 1009-A Sager Creek Drive, Arkansas 72761 (US)
(74) Representative: Gold, Tibor Z.
(86) International application number: US9208189
(87) International publication number: WO9402781

(56) References cited:
- US-A- 4 052 265
- US-A- 4 235 676
- US-A- 4 977 839
- US-A- 5 220 873

## Description

### BACKGROUND OF THE INVENTION

### Field of the Invention

The present invention relates generally to a method for removing hydrocarbons from materials contaminated therewith and waste materials for recycling, and more particularly to a method for retorting organic matter in an essentially continuous closed system which is adaptable to various types of raw materials to be treated and which does not have a negative effect on the ecology.

In US-A-4 052 265 a method of retorting organic matter is disclosed, wherein the matter is advanced through a heated chamber in the absence of oxygen to convert the matter into by-products and the temperature in the chamber is sensed at a plurality of locations. However, this disclosed method does not provide for heating different parts of the chamber differentially.

According to one aspect of the present invention, there is provided a method of retorting organic matter comprising the steps of:
advancing said organic matter through a chamber in the absence of oxygen;
sensing the temperature in said chamber at a plurality of locations along the length of said chamber;
generating heat by a plurality of burners located along the length of said chamber in response to the temperature sensed at said locations so as to convert said organic matter into a plurality of by-products; and
burning at least one of said by-products in said burners; characterised by locating the said burners externally of said chamber so as to heat said chamber indirectly;
individually adjusting the heat generated by said burners, and
utilising said generated heat selectively to raise the temperature of said organic matter at a plurality of locations along the length of said chamber

Thus the present invention provides a method of retorting organic matter which is easily selectably adaptable to a number of variables including the input raw material to be treated, the desired quality of the output byproducts, a start-up versus steady state condition, and flow rate; wherein the retorting takes place in an essentially closed system which is capable to recycling selected byproducts of the process for burning within the system and without creating atmospheric pollution. The method is thus capable of retorting organic matter by utilising, selectively, byproducts of the process for creating heat within the process in an essentially closed system manner and which is simple and cost-effective and which will profitably process a substantial volume of material on a continual operating basis; and which is highly mobile and completely self-contained.

### BRIEF DESCRIPTION OF THE DRAWINGS

The invention will be further described in conjunction with the accompanying drawings, in which:
FIGURE 1 is a flow diagram of the method of the present invention;

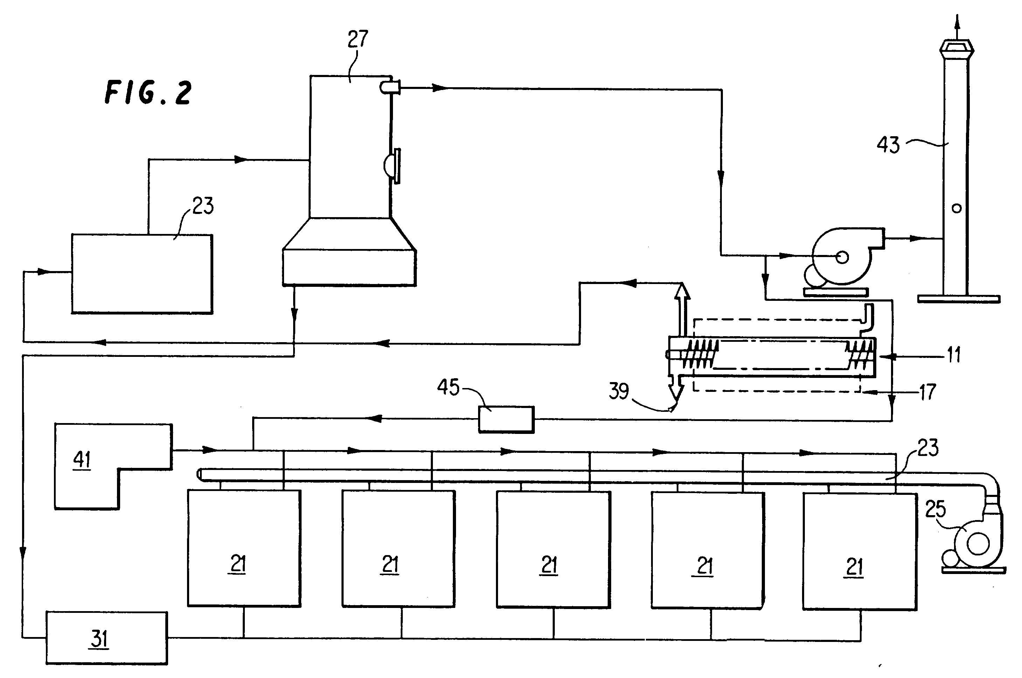

FIGURE 2 is a flow diagram of the preferred embodiment of the present invention;
FIGURE 3 is a side plan view of the exterior of the apparatus of the present invention;
FIGURE 4 is a side view of the inlet portion of the mobile apparatus of the present invention;
FIGURE 5 is a partial cutaway end view of the retort chamber of the present invention;
FIGURE 6 is a partial end plan view of the inlet portion of the apparatus of the present invention; and
FIGURE 7 is a partial side view of the outlet portion of the retort chamber of the present invention.

### DETAILED DESCRIPTION FOR THE PREFERRED EMBODIMENT

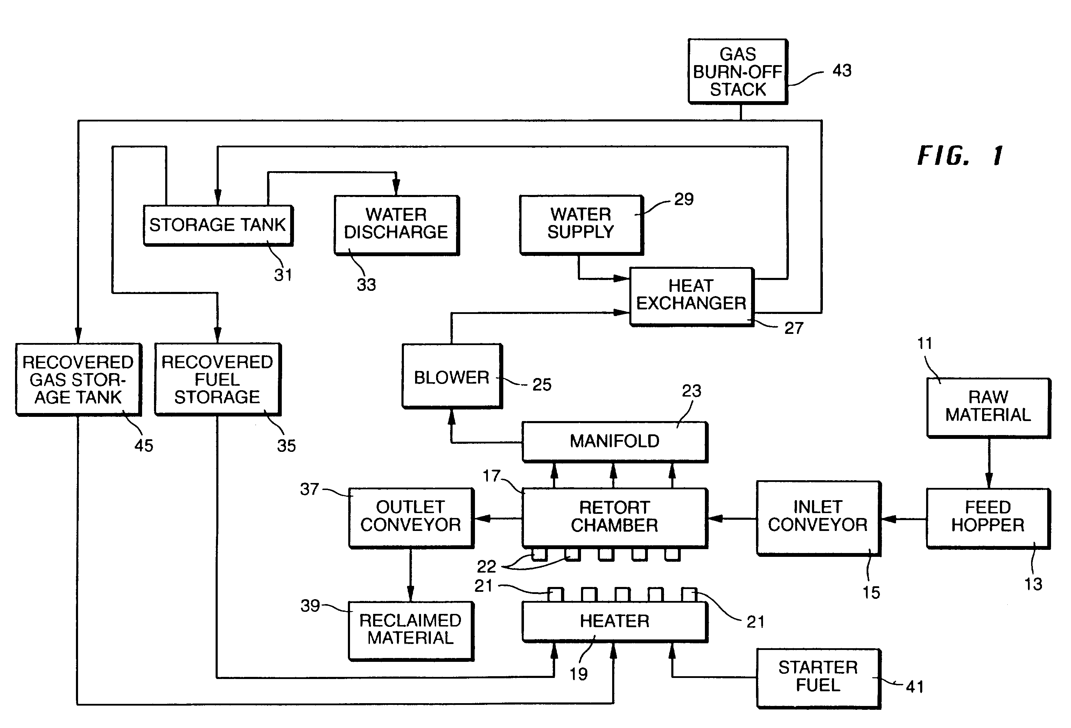

With reference to the figures, wherein like reference characters indicate like elements throughout the several views and, in particular, with reference to Figure 1, there is shown a source of raw material 11, to be treated, which is first loaded into a feed hopper 13 manually or, preferably, by way of a motorised front-end loader, dump-truck, or the like. The raw material to be treated may be any solid material, wherein it is desired to remove hydrocarbons or contaminants such that the separated byproducts of the process can be separately utilised or disposed of. Some examples of such raw materials are contaminated soil, tires, automobile fluff, medical waste, batteries, asphalt, roof shingles, chicken droppings, iron oxide, gas contaminated soil, PCB in soil, tanker bottoms, drill cuttings, oil field sludge, tar sands, landfills (household garbage), and belt cake. The feed hopper 13 is preferably equipped with rotating blades to break the material into chunks, which then drop onto an inlet conveyor means 15 such as an auger conveyor. The inlet conveyor means 15 lifts or conveys the chunk material to the input end of a retort chamber means 17. The retort chamber means 17 is heated by a heater means 19. The heater means 19 includes a plurality of burners 21 spaced along the length of the retort chamber 17, with each burner 21 being capable of selective individual adjustment. The burners 21 are spaced along the length of the retort chamber 17 for directing a plurality of individual gases flames along the length thereof.

The retort chamber means 17 preferably includes a retort screw or auger that rotates inside of a stainless steel retort pipe causing the raw material 11 to be conveyed through the retort pipe to the outlet end of the retort chamber 19. The interior of the retort pipe is maintained oxygen-free by the use of airlocks in a conventional manner which will be apparent to those skilled in the art.

The heated air from the burners 21 passes through a plenum chamber to heat the retort pipe to a desired temperature which may be in excess of 730°C (1200°F). The temperature is selected to be sufficient to drive out all of the hydrocarbons from the raw material being conveyed through the retort pipe. A plurality of temperature sensors 22 are provided at spaced distances along the length of the retort chamber for sensing the temperature of the retort chamber at spaced distances along the length thereof. The gaseous flames from the burners 21 are adjusted along the length of the chamber in response to the temperature sensed by the sensors 22. The interior of the retort chamber 17 surrounding the retort pipe is lined with refractory materials such that the heat generated in the plenum chamber will be absorbed by the refractories which will then be the primary source of heat for the retort chamber pipe. The burners 21 are adjusted individually from a condition of being completely turned off to a condition of generating maximum heat, selectively and individually, so as to provide sufficient heat to the material in the retort pipe at each location therealong according to the amount of heat necessary at that position within the retort pipe needed at a particular time. The particular temperature required for treating a particular raw material depends upon the end result which is desired. For example, the temperature applied to a solid material containing hydrocarbons would depend upon the amount of hydrocarbons desired to be removed. With regard to automobile tires, the byproducts would be carbon black, oil, and methane. Depending upon the desired BTU (Brtish Thermal Units) content desired for the carbon black, the temperature must be ajusted in such a way to remove a certain portion of the hydrocarbons while leaving a certain portion of the hydrocarbons in the carbon black. The more hydrocarbons contained in the carbon black, the higher the BTU value of the carbon black byproduct. Depending upon the end use for the carbon black, and the potential economic value of each of the three byproducts, the temperature will be selected to produce each of the three end products of the process accordingly.

There is also reason for desiring a different temperature at the inlet portion of the retort chamber than at the outlet portion of the retort chamber. For example, when treating oilfield sludge which contains approximately 1/3 water, 1/3 oil, and 1/3 soil, it is necessary to remove the water in the early stages of the process before the oil can be cracked and removed from the soil. The water has to be heated to 100°C (212°F) to vaporize, and takes seven times the amount of energy to vaporize than oil. When feeding oilfield sludge through the retort chamber, the initial feed of sludge will need a higher temperature to reduce the water before the oil will start cracking. If the water remains in the sludge, it will automatically drop the bed temperature. Therefore, increasing the bed temperature at the initial burners 21 at the inlet end of the retort chamber will insure total vaporization of the water such that the remaining burners 21 at the middle and output ends of the retort chamber can be utilized for cracking the oil.

The particular settings for the temperature at any portion of the retort chamber will be in accordance with a number of variables, such as the particular raw material 11 being introduced into the process, the desired output materials including the BTU value of such materials and the economic value of each of the materials, the start-up versus steady state condition of the retort chamber, the necessity to drive off water or other selected volatiles in the initial stage of the retort process, and the flow rate of the materials through the retort chamber.

As will be described in more detail, fins are provided along the bottom of the retort pipe such that the temperature at the lower portion of the retort pipe is higher than the temperature at the upper portion of the retort pipe. The raw materials being conveyed through the retort chamber are contained in the lower portion of the retort pipe and therefore require a higher temperature applied thereto as opposed to the gaseous byproducts which are contained in the upper portion of the retort pipe.

The burners 21 are capable of operation from three distinct fuels, such as natural gas, methane and oil, which may be individually selected depending upon the availability and cost of each of the materials. For example, when treating shredded tire material, the process may be started by utilizing natural gas. However, the byproducts methane and oil from the treated automobile tire scrap material can be recycled to operate the burners once the process has begun. Therefore, the system becomes an essentially closed system utilizing its own byproducts to feed the burners and to create heat which will in turn generate more byproducts. Furthermore, the excess oil and methane from the process may be stored for resale.

As the water and hydrocarbons from the process are vaporized in the retort chamber, they are pulled away from the raw material through a manifold means 23 of a blower 25 (e.g., a typical induction draft fan). After the vapors leave the retort pipe, they are forced into a tube and shell heat exchanger 27, where condensing occurs. Water is conveyed to the heat exchanger 27 from a water supply 29. The liquid (oil and water) from the heat exchanger 27 is conveyed to a storage tank 31 and is separated. The separated water is conveyed to a water discharge 33. The separated oil is conveyed to a covered fuel storage means 35, which may be conveyed back to the heater means 21 for re-burning, or which may be stored for later disposal and/or sale.

After the hydrocarbons have been removed from the raw material to be treated, the remaining solid material is removed from the output end of the retort chamber means 17 onto an outlet conveyor means 37, which may also be a transfer auger, so as to remove the reclaimed solid material for resale and/or disposal.

A starter fuel such as natural gas 41 is utilized to initially burn in the burners 21 to begin the process until sufficient byproducts are generated in the retort chamber to be recycled to the burners, after which the starter fuel would be discontinued. The gaseous products from the heat exchanger 27 may be flared or burned-off through a gas burn-off stack 43 or may be recovered in a gas storage tank 45. The recovered gas in storage tank 45 can be fed back to the heater means 19 to be burned in burners 21.

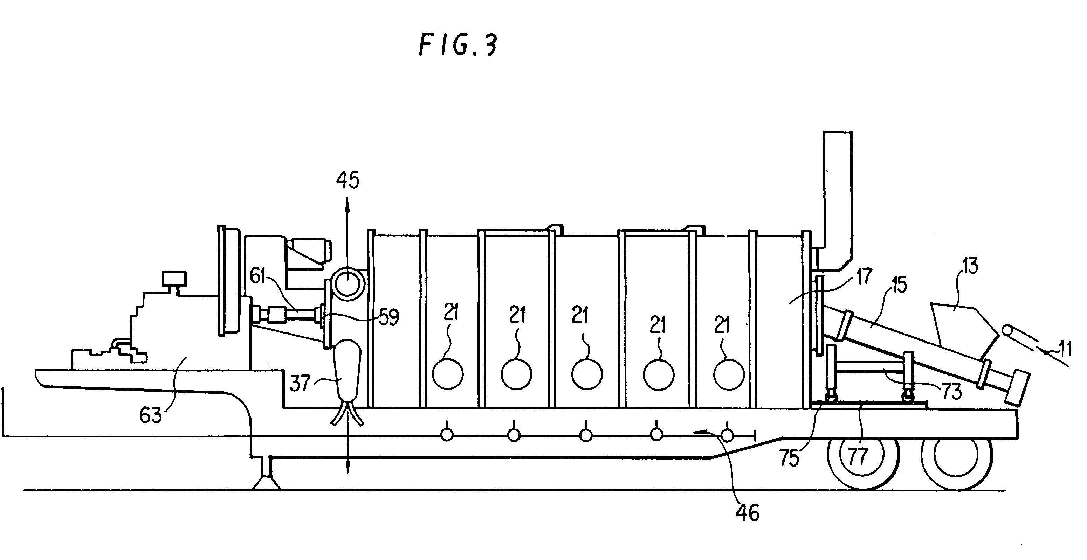

As shown in Figure 3, the entire apparatus, as described, can be completely mounted on a flatbed truck 46 so as to be movable from location to location. The only additional materials to be supplied at a particular location would be storage tanks for the reclaimed materials, and equipment for loading the raw material 11 into the hopper 13.

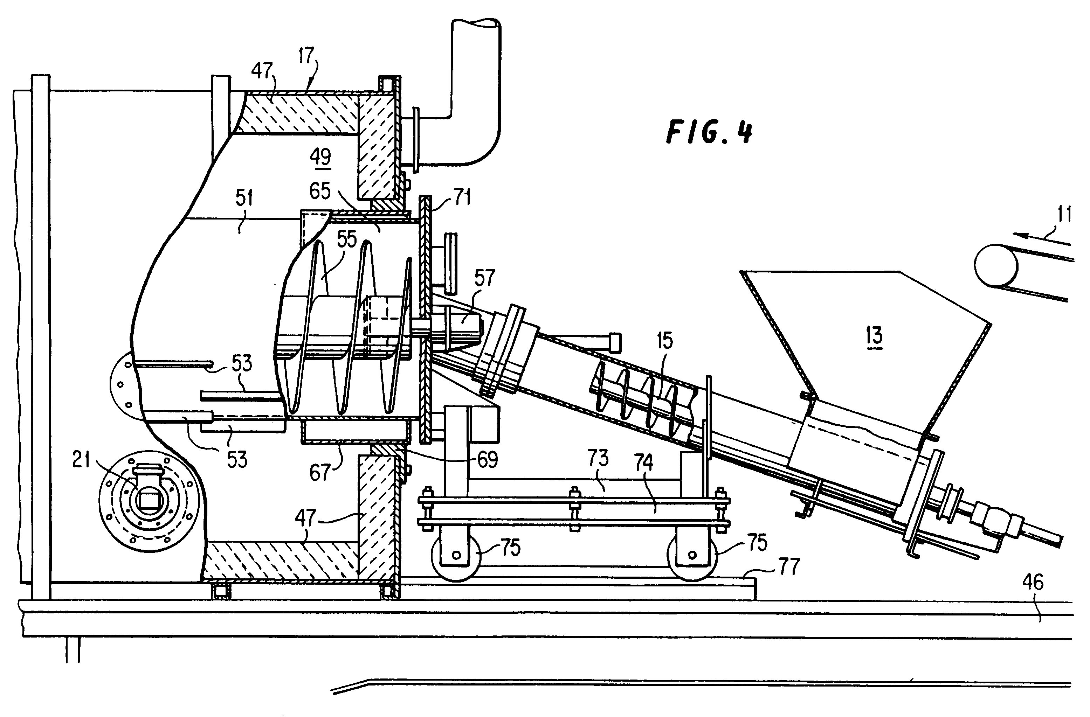

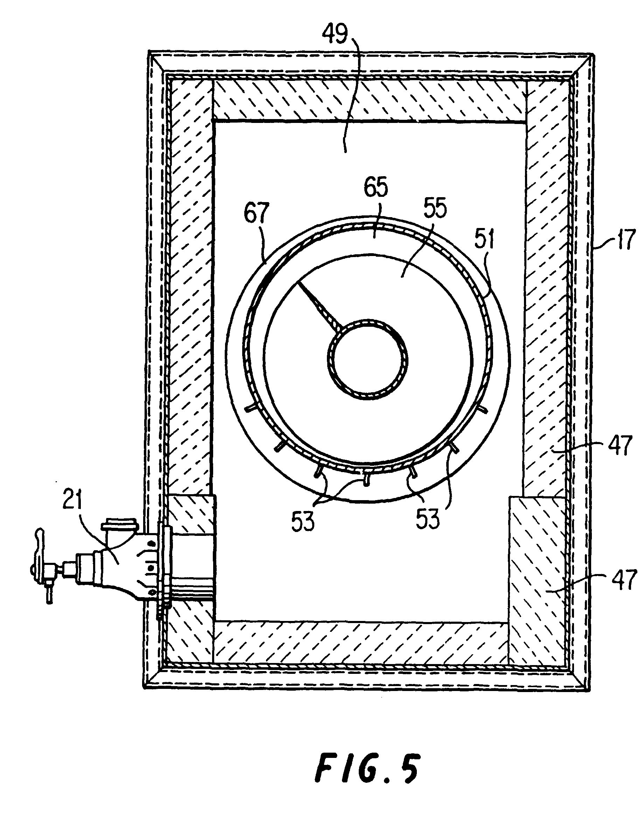

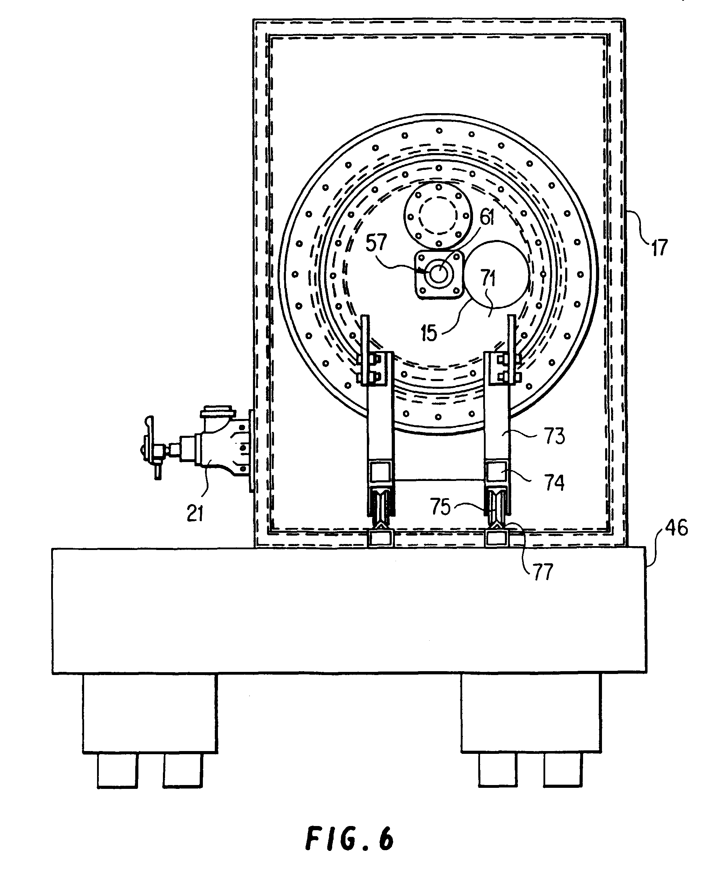

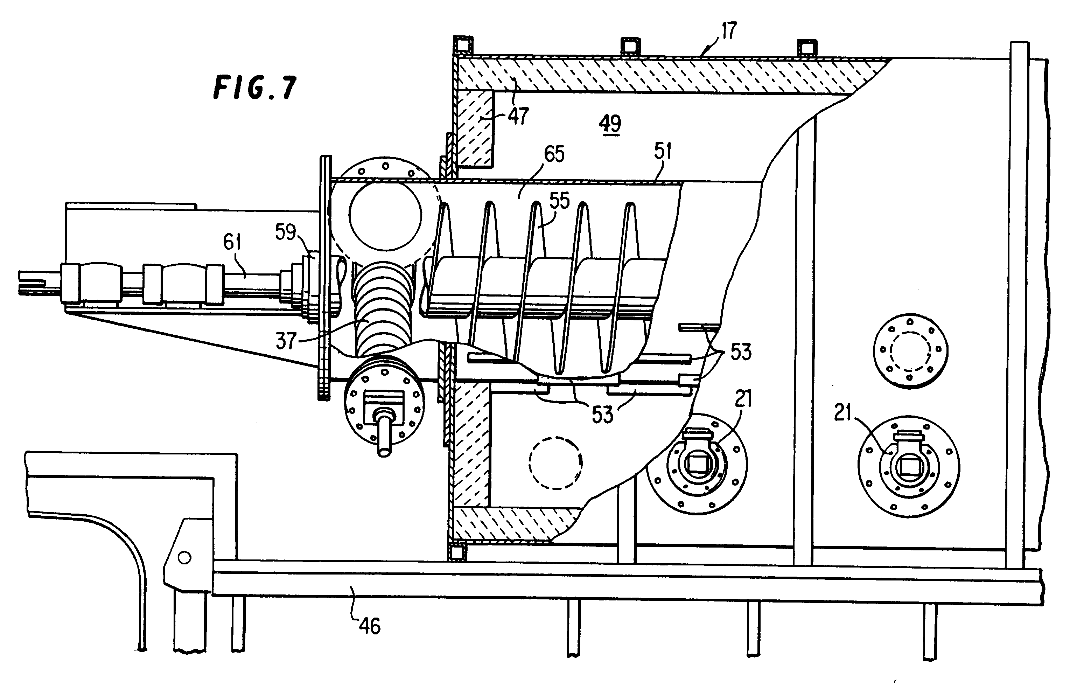

Referring now to Figures 4 through 7, wherein details of the mechanism are more clearly illustrated, there is shown a truck bed 46 upon which the entire apparatus is assembled such that it may be easily brought upon a site wherein the raw materials to be treated are located. The retort chamber means 17 rest upon the truck bed 46 and may be securely fastened thereto by conventional means. The interior of the retort chamber means 17 are lined with refractory material 47. The flames from the burners 21 heat the air in the plenum chamber 49, which in turn heats the refractory material 47 to radiantly heat the retort pipe 51 which is constructed of stainless steel or other suitable heat conducting material. Fins 53 are provided along the lower portion of retort pipe 51 for assuring a higher temperature in the lower portion of the retort pipe 51 than in the upper portion thereof. A retort auger conveyor 55 is journaled in bearings 57 and 59 at the inlet and outlet portions, respectively, of the retort pipe 51. The retort auger conveyor 55 is rotated by means of a drive shaft 61 which is rotated by conventional power means 63. The retort auger conveyor 55 is located adjacent the lower portion of the retort pipe 51 so as to leave a space 65 between the retort auger conveyor 55 and the upper portion of the retort pipe 51 for easy passage and removal of gases generated during the process. Furthermore, the space 65 allows for thermal expansion of the metallic parts, which will occur during the heating process.

Referring now to Figures 3, 4 and 6, details of the inlet portion of the retort chamber means 17 are shown. The retort pipe 51 has a circumferential flange member 67 affixed thereto, which is slidably mounted in a circumferential seal 69. The seal 69 is affixed to the retort chamber means 17 such that the circumferential flange member 67 can axially slide along the seal 69 allowing for thermal expansion of the retort auger conveyor 55, the retort pipe 51, and other metallic parts being heated. The inlet conveyor means 15, feed hopper 13, and associated inlet feed equipment are fixedly attached to the outer end wall 71 of the inlet portion of the retort pipe 51. A frame member 73 is affixed to the outer end wall 71, the inlet conveyor means 15 and other inlet supported equipment, and is mounted on a base 74 having wheel members 75 which ride upon tracks 77 mounted on the truck bed 46. In this manner, as the retort chamber means 17 heats the retort pipe 51, retort auger conveyor 55 and associated equipment, the thermal expansion of the metallic parts will cause elongation in the axial direction. As the metallic parts expand, the retort pipe 51 will axially move in the direction of the inlet portion such that circumferential flange member 67 will slide along seal 69. The inlet conveyor means 15, feed hopper 13, and associated inlet equipment which are fixedly attached to the movable frame member 73 will slide along the tracks 77 mounted on the truck bed.

As can be seen from the foregoing description, a retort system has been described which can have all of the essential components thereof mounted upon a truck bed to be brought upon a location having contaminated or waste products and wherein the waste products can be converted to end products which can be recycled or disposed of without creating any damaging effects to the ecology. The solid, liquid and gaseous byproducts of the process can be removed in storage containers. Excess gas can be flared, on site, if such gases do not produce products harmful to the atmosphere. Furthermore, oil and burnable gas which may be byproducts of the process can be recycled to the apparatus to create an essentially closed system which does not need auxiliary fuel except in the start-up period. The burners in the heater means can be individually controlled by heat sensors and can be selectively adjusted depending upon conditions desired. The system can be adapted to produce byproducts in a most desirable state depending upon the economic value of each of the byproducts and the intended end use of each of the byproducts.

## Claims

1. A method of retorting organic matter comprising the steps of:
advancing said organic matter through a chamber (17) in the absence of oxygen;
sensing the temperature in said chamber at a plurality of locations (22) along the length of said chamber (17);
generating heat by a plurality of burners (21) located along the length of said chamber (17) and externally of said chamber (17) in response to the temperature sensed at said locations (22) so as to heat said chamber (17) indirectly; so as to convert said organic matter into a plurality of by-products (35, 45); and
burning at least one of said by-products in said burners (21);
individually adjusting the heat generated by said burners (21), and
utilising said generated heat selectively to raise the temperature of said organic matter at a plurality of locations along the length of said chamber (17).

2. The method of claim 1, further comprising the steps of:
separating the solid and gaseous by-products (35, 45);
mechanically removing said solid by-product from said chamber (17);
condensing said gaseous by-products into liquid and burnable gaseous by-products;
separating said liquid by-products into burnable and non-burnable by-products; and
selectively burning either said burnable liquid by-products or said burnable gaseous by-products in said burners (21).

3. The method of claim 1 or 2 further comprising the steps of:
raising the temperature of said organic matter at the inlet portion of said chamber (17) to a temperature sufficient to evaporate water contained in said organic matter; and
maintaining the temperature of said organic matter at a level sufficient to crack oil from said organic matter once said water has been removed therefrom.

4. A method for retorting matter containing hydrocarbons comprising the steps of:
advancing said material through a retort pipe (51) within a retort chamber (17), wherein said retort chamber (17) is lined with refractory material (47) and wherein an air plenum (49) is provided between said retort pipe (51) and said refractor material (47);
sensing the temperature in said air plenum (49) at a plurality of locations along the length thereof;
individually adjusting the heat generated by a plurality of burners located along the length of said chamber and externally of said chamber (17) in response to the temperature sensed at said locations so as to heat said chamber (17) indirectly;
utilizing said generated heat to create a desired temperature of said refractory material (47) at a plurality of locations along the length of said chamber;
radiating heat from said refractory material (47) to said retort pipe (51) so as to convert said matter containing hydrocarbons into a plurality of by-products burning at least one of said by-products in said burners; and
removing said by-products from said chamber (17).

5. The method of claim 1 or claim 4, further comprising the step of disposing of substantially all of said by-products without creating any harmful effect on the environment.

6. The method of claim 4 or 5, further comprising the steps of:
separating the solid and gaseous by-products;
mechanically removing said solid by-products from said chamber;
condensing said gaseous by-products into liquid and burnable gaseous by-products;
separating said liquid by-products into burnable and non-burnable by-products; and
selectively burning either said burnable liquid by-products
or said burnable gaseous by-products in said burners (21).

7. The method of any of claims 4 to 6 further comprising the steps of:
raising the temperature of said material at the inlet portion of said retort pipe (51) to a temperature sufficient to evaporate water contained in said material; and
maintaining the temperature of said material at a level sufficient to crack oil from said material once said water has been removed therefrom.

8. The method of claims 6, 7 and 8 further comprising the step of maintaining the temperature in the lower portion of said retort pipe (51) higher than the temperature in the upper portion thereof.

9. The method of claim 2 or 8, further comprising the steps of:
containing said burnable gaseous by-products;
burning a portion of said gaseous by-products in said burners (21), and
selectively disposing of the remainder of said gaseous by-products by removal in storage tanks or flaring in the atmosphere.

10. Apparatus for retorting organic matter, including means for advancing the organic matter through a chamber (17) in the absence of oxygen, means for sensing the temperature in the chamber at a plurality of locations (22) along the length of the chamber (17), a plurality of burners (21) located along the length of said chamber (17) for generating heat to convert said organic matter into a plurality of by-products and to burn at least one of the said by-products in said burners, characterised in that, said burners (21) are located externally of the chamber (17) so as to heat the latter indirectly, and means for individually adjusting the heat generated by the said burners (21) in response to the temperature sensed at the said locations (22).

## Patentansprüche

1. Verfahren zum Destillieren von organischen Materialien in einer Retorte, umfassend die folgenden Verfahrensschritte:
Fördern des organischen Materials durch eine Kammer (17) in Abwesenheit von Sauerstoff;
Ermitteln der Temperatur in besagter Kammer an einer Mehrzahl von Positionen (22) entlang der Länge der Kammer (17);
Erzeugen von Wärme durch eine Vielzahl von entlang der Länge der Kammer und außerhalb der Kammer (17) angeordnetern Brennern (21) in Reaktion auf die an den verschiedenen Positionen (22) ermittelten Temperaturen zur indirekten Erwärmung der Kammer (17), um das organische Material in eine Mehrzahl von Nebenprodukten (35, 45) umzuwandeln; und
Verbrennen zumindest eines der Nebenprodukte in besagten Brennern (21);
individuelles Einstellen der von den Brennern (21) erzeugten Wärme; und
selektives Verwenden der erzeugten Wärme, um die Temperatur des organischen Materials an einer Mehrzahl von Positionen entlang der Länge der Kammer (17) anzuheben.

2. Verfahren nach Anspruch 1, umfassend die weiteren Verfahrensschritte:
Trennen der festen und gasförmigen Nebenprodukte (35, 45);
mechanisches Entfernen des festen Nebenproduktes aus der Kammer (17),
Kondensieren der gasförmigen Nebenprodukte in flüssige und brennbare gasförmige Nebenprodukte;
Trennen der flüssigen Nebenprodukte in brennbare und nicht brennbare Nebenprodukte; und
selektives Verbrennen entweder der brennbaren flüssigen Nebenprodukte oder der brennbaren gasförmigen Nebenprodukten in den Brennern (21).

3. Verfahren nach Anspruch 1 oder 2, umfassend die weiteren Verfahrensschritte:
Anheben der Temperatur des organischen Materials im Einlaßbereich der Kammer (17) auf eine Temperatur, die ausreichend ist, um das in dem organischen Material enthaltene Wasser zu verdampfen; und
Aufrechterhalten der Temperatur des organischen Materials auf einem Wert, der ausreichend ist, um Öl von dem organischen Material abzuspalten, nachdem das Wasser hiervon entfernt worden ist.

4. Verfahren zum Destillieren von Materialien, die Kohlenwasserstoff enthalten, in einer Retorte, umfassend die folgenden Verfahrensschritte:
Fördern des Materials durch eine Destillierleitung (51) innerhalb einer Destillierkammer (17), wobei die Destillierkammer (17) mit hitzebeständigem Material (47) ausgekleidet ist und wobei ein luftgefüllter Raum (49) zwischen der Destillierleitung (51) und dem hitzebeständigen Material (47) vorgesehen ist;
Ermitteln der Temperatur in dem luftgefüllten Raum (49) an einer Mehrzahl von Positionen entlang dessen Länge;
individuelles Einstellen der durch eine Mehrzahl von Brennern erzeugten Wärme, die entlang der Länge der Kammer und außerhalb der Kammer (17) angeordnet sind, in Reaktion auf die an den verschiedenen Positionen ermittelte Temperatur, um die Kammer (17) indirekt zu erwärmen;
Verwenden der erzeugten Wärme, um eine gewünschte Temperatur des hitzebeständigen Materials (47) an einer Mehrzahl von Positionen entlang der Länge der Kammer zu erhalten;
Abstrahlen von Wärme von dem hitzebeständigen Material (47) auf die Destillierleitung (51), um das Kohlenwasserstoff enthaltende Material in eine Vielzahl von Nebenprodukten umzuwandeln;
Verbrennen zumindest eines der Nebenprodukte in den besagten Brennern; und
Entfernen der Nebenprodukte aus der Kammer (17).

5. Verfahren nach Anspruch 1 oder Anspruch 4, umfassend den weiteren Verfahrensschritt:
Beseitigen im wesentlichen aller besagter Nebenprodukte, ohne auf die Umwelt einen schädigenden Einfluß auszuüben.

6. Verfahren nach Anspruch 4 oder 5, umfassend den weiteren Verfahrensschritt:
Trennen der festen und gasförmigen Nebenprodukte;
mechanisches Entfernen des festen Nebenproduktes aus der Kammer;
Kondensieren der gasförmigen Nebenprodukte in flüssige und brennbare gasförmige Nebenprodukte;
Trennen der flüssigen Nebenprodukte in brennbare und nicht brennbare Nebenprodukte; und
selektives Verbrennen entweder der brennbaren flüssigen Nebenprodukte oder der brennbaren gasförmigen Nebenprodukten in den Brennern (21).

7. Verfahren nach einem der Ansprüche 4 bis 6, umfassend den weiteren Verfahrensschritt:
Anheben der Temperatur des Materials im Einlaßbereich der Destillierleitung (51) auf eine Temperatur, die ausreichend ist, um das in dem Material enthaltene Wasser zu verdampfen; und
Aufrechterhalten der Temperatur des Materials auf einem Wert, der ausreichend ist, Öl von dem Material abzuspalten, nachdem das Wasser hiervon entfernt worden ist.

8. Verfahren nach den Ansprüchen 6, 7 und 8, umfassend den weiteren Verfahrensschritt:
Aufrechterhalten der Temperatur in dem unteren Bereich der Destillierleitung (51) auf einem Wert, der höher ist als die Temperatur in dem oberen Bereich.

9. Verfahren nach Anspruch 2 oder 8, umfassend die weiteren Verfahrensschritte:
Auffangen der brennbaren gasförmigen Nebenprodukte;
Verbrennen eines Teils der gasförmigen Nebenprodukte in besagten Brennern (21); und
selektives Beseitigen der Rückstände der gasförmigen Nebenprodukte durch Entfernen in Aufbewahrungstanks oder durch Abfackeln in die Atmosphäre.

10. Vorrichtung zum Destillieren organischer Materialien in einer Retorte mit Mitteln zum Fördern der organischen Materialien durch eine Kammer (17) in Abwesenheit von Sauerstoff, Mitteln zum Ermitteln der Temperatur in der Kammer an einer Mehrzahl von Positionen (22) entlang der Länge der Kammer (17), einer Mehrzahl von Brennern (21), die entlang der Länge der Kammer (17) angeordnet sind zur Erzeugung von Wärme, um das organische Material in eine Mehrzahl von Nebenprodukten umzuwandeln und zumindest eines der Nebenprodukte in besagten Brennern zu verbrennen, dadurch gekennzeichnet,
daß die Brenner (21) außerhalb der Kammer (17) angeordnet sind, so daß sie diese indirekt erwärmen, und daß Mittel zum individuellen Einstellen der durch die Brenner (21) erzeugten Wärme in Reaktion auf die in besagten Positionen (22) ermittelte Temperatur vorgesehen sind.

## Revendications

1. Procédé de distillation en cornue de matière organique, comprenant les étapes consistant :
à faire avancer ladite matière organique au travers d'une chambre (17), en l'absence d'oxygène ;
à détecter la température dans ladite chambre au niveau d'une pluralité d'emplacements (22) situés le long de la longueur de ladite chambre (17) ;
à générer de la chaleur au moyen d'une pluralité de brûleurs (21) situés le long de la longueur de ladite chambre et à l'extérieur de ladite chambre (17), en réponse à la température détectée au niveau desdits emplacements (22) de façon à chauffer indirectement ladite chambre (17) ; de manière à convertir ladite matière organique en une pluralité de sous-produits (35, 45) ; et
à brûler au moins l'un desdits sous-produits dans l'un desdits brûleurs (21) ;
à ajuster individuellement la chaleur générée par lesdits brûleurs (21) ; et
à utiliser ladite chaleur générée sélectivement pour augmenter la température de ladite matière organique en une pluralité d'emplacements le long de la longueur de ladite chambre (17).

2. Procédé selon la revendication 1, comprenant en outre les étapes consistant :
à séparer les sous-produits solides et gazeux (35, 45) ;
à retirer mécaniquement lesdits sous-produits solides de ladite chambre (17) ;
à condenser lesdits sous-produits gazeux en des sous-produits liquides et en des sous-produits gazeux combustibles ;
à séparer lesdits sous-produits liquides en des sous-produits combustibles et non combustibles ; et
à brûler sélectivement soit lesdits sous-produits liquides combustibles, soit lesdits sous-produits gazeux combustibles, dans lesdits brûleurs (21).

3. Procédé selon la revendication 1 ou 2, comprenant en outre les étapes consistant :
à augmenter la température de ladite matière organique, au niveau de la portion d'entrée de ladite chambre (17), jusqu'à une température suffisante pour évaporer l'eau contenue dans ladite matière organique ; et
à maintenir la température de ladite matière organique à un niveau suffisant pour réaliser un craquage de l'huile issue de ladite matière organique une fois que ladite eau a été retirée de celle-ci.

4. Procédé de distillation en cornue d'une matière contenant des hydrocarbures, comprenant les étapes consistant :
à faire avancer ledit matériau au travers d'un tuyau de cornue (51) à l'intérieur d'une chambre de cornue (17), ladite chambre de cornue (17) étant chemisée intérieurement à l'aide d'un matériau réfractaire (47) et une chambre de circulation d'air (49) étant prévue entre ledit tuyau de cornue (51) et ledit matériau réfractaire (47) ;
à détecter la température dans ladite chambre de circulation d'air (49), en une pluralité d'emplacements se trouvant le long de la longueur de celle-ci ;
à ajuster individuellement la chaleur générée par une pluralité de brûleurs situés le long de la longueur de ladite chambre et à l'extérieur de ladite chambre (17) en réponse à la température détectée auxdits emplacements, de façon à chauffer indirectement ladite chambre (17) ;
à utiliser ladite chaleur générée pour obtenir une température voulue dudit matériau réfractaire (47) en une pluralité d'emplacements se trouvant le long de la longueur de ladite chambre ;
à émettre de la chaleur par rayonnement depuis ledit matériau réfractaire (47), vers ledit tuyau de cornue (51), de manière à convertir ladite matière contenant des hydrocarbures en une pluralité de sous-produits et à brûler au moins l'un desdits sous-produits dans lesdits brûleurs ; et
à retirer lesdits sous-produits de ladite chambre (17).

5. Procédé selon la revendication 1 ou la revendication 4, comprenant en outre l'étape consistant à rejeter sensiblement tous lesdits sous-produits sans créer d'effet nuisible sur l'environnement.

6. Procédé selon la revendication 4 ou 5, comprenant en outre les étapes consistant :
à séparer les sous-produits solides et gazeux ;
à retirer mécaniquement lesdits sous-produits solides de ladite chambre ;
à condenser lesdits sous-produits gazeux en des sous-produits liquides et en des sous-produits gazeux combustibles ;
à séparer lesdits sous-produits liquides en des sous-produits combustibles et non combustibles ; et
à brûler sélectivement soit lesdits sous-produits liquides combustibles, soit lesdits sous-produits gazeux combustibles, dans lesdits brûleurs (21).

7. Procédé selon l'une quelconque des revendications 4 à 6, comprenant en outre les étapes consistant :
à augmenter la température dudit matériau, au niveau de la portion d'entrée dudit tuyau de cornue (51), jusqu'à une température suffisante pour évaporer l'eau contenue dans ledit matériau ; et
à maintenir la température dudit matériau à un niveau suffisant pour réaliser un craquage de l'huile issue dudit matériau une fois que ladite eau a été éliminée de celui-ci.

8. Procédé selon les revendications 6, 7 et 8, comprenant en outre l'étape consistant à maintenir la température dans la portion inférieure dudit tuyau de cornue (51) à un niveau plus élevé que la température dans la portion supérieure de celui-ci.

9. Procédé selon la revendication 2 ou 8, comprenant en outre les étapes consistant :
à retenir lesdits sous-produits gazeux combustibles ;
à brûler une portion desdits sous-produits gazeux dans lesdits brûleurs (21) ; et
à rejeter sélectivement le reste desdits sous-produits gazeux par décharge dans des cuves de stockage ou combustion dans l'atmosphère.

10. Appareil de distillation en cornue de matière organique, comprenant des moyens pour faire avancer la matière organique au travers d'une chambre (17) en l'absence d'oxygène, des moyens pour détecter la température dans la chambre en une pluralité d'emplacements (22) se trouvant le long de la longueur de la chambre (17), une pluralité de brûleurs (21) situés le long de la longueur de ladite chambre (17) pour générer de la chaleur destinée à convertir ladite matière organique en une pluralité de sous-produits et à brûler au moins l'un desdits sous-produits dans lesdits brûleurs, caractérisé en ce que lesdits brûleurs (21) sont situés à l'extérieur de la chambre (17), de façon à chauffer indirectement celle-ci, et par des moyens pour ajuster individuellement la chaleur générée par lesdits brûleurs (21) en réponse à la température détectée au niveau desdits emplacements (22).
